# EUROPEAN PATENT APPLICATION

(11) **EP 4 683 184 A1**
(43) Date of publication of application: **21.01.2026**
(21) Application number: 24927706.2
(22) Date of filing: 31.05.2024
(51) Int. Cl.: H02K 7/14, H02K 9/14, H02K 9/06, A47L 9/22

(54) **MOTOR**

(71) Applicant: LG ELECTRONICS, INC., Seoul 07336 (KR)
(72) Inventor: KIM, Junhyung, Seoul 08592 (KR)
(74) Representative: Vossius & Partner Patentanwälte Rechtsanwälte mbB
(86) International application number: PCT/KR2024/007507
(87) International publication number: WO 2025/249615

(57) **Abstract**

Provided is a cleaner. According to one aspect of the present disclosure, a motor includes: a rotational shaft; a rotor coupled to the rotational shaft; a stator core placed at a radial outer side of the rotor; an insulator coupled to the stator core; a housing coupled to the insulator and enclosing the stator core; an impeller coupled to an axial upper region of the rotational shaft; an impeller cover coupled to the housing and enclosing the impeller; and a coupling member coupling the housing and the impeller cover. In this case, the housing may include an upper housing, and a lower housing spaced apart from the upper housing in the axial direction, the impeller cover may include an upper impeller cover, and a lower impeller cover placed in the axial lower portion of the upper impeller cover, and the coupling member may be coupled to the upper impeller cover by sequentially penetrating the lower housing, the upper housing, and the lower impeller cover. As a result, deformation of an impeller cover that occurs during operation of the motor may be reduced, and flow path performance may be enhanced.

## Description

### [Technical Field]

The present disclosure relates to a motor, and more particularly, to a motor for a cleaner that performs cleaning by sucking or wiping off dust or foreign materials of a cleaning target region.

### [Background Art]

In general, a vacuum cleaner is a household appliance that sucks foreign materials such as dust and collects the sucked foreign materials in a separate collection unit installed inside a body.

Specifically, a high suction force is required for the vacuum cleaner to effectively suck the foreign materials, and an intensity of the suction force is proportional to a rotational force of a motor. That is, the higher the rotational force of the motor is, the higher a rotational speed of a fan connected to the motor is, so that and a suction force of the foreign materials becomes higher.

In general, a motor for a vacuum as a device that obtains rotational force from electrical energy includes a stator and a rotor. The rotor can be rotated by an electromagnetic interaction with the stator.

A conventional motor for a cleaner includes a rotational shaft that rotates with the rotor, an impeller coupled to the rotational shaft, an impeller cover that encloses the impeller, and a housing that supports the stator.

In this case, due to coupling of the housing with a radial outer region of the impeller cover, there is a problem in that deformation occurs in the impeller cover during motor driving, and spatial efficiency is reduced.

### [Disclosure]

### [Technical Problem]

An object to be achieved by the present disclosure is to provide a motor that may reduce deformation of an impeller cover that occurs during operation of the motor and enhanced flow path performance.

Further, an object to be achieved by the present disclosure is to provide a motor that may enhance spatial efficiency.

### [Technical Solution]

In order to achieve the object, according to one aspect of the present disclosure, a motor includes: a rotational shaft; a rotor coupled to the rotational shaft; a stator core placed at a radial outer side of the rotor; an insulator coupled to the stator core; a housing coupled to the insulator and enclosing the stator core; an impeller coupled to an axial upper region of the rotational shaft; an impeller cover coupled to the housing and enclosing the impeller; and a coupling member coupling the housing and the impeller cover.

In this case, the housing may include an upper housing, and a lower housing spaced apart from the upper housing in the axial direction, the impeller cover may include an upper impeller cover, and a lower impeller cover placed in the axial lower portion of the upper impeller cover, and the coupling member may be coupled to the upper impeller cover by sequentially penetrating the lower housing, the upper housing, and the lower impeller cover.

As a result, deformation of an impeller cover that occurs during operation of the motor may be reduced, and flow path performance may be enhanced.

Further, the upper impeller cover may be formed such that an inner diameter of a lower region is smaller than an inner diameter of an upper region, the lower impeller cover may be formed such that an inner diameter of an upper region is smaller than an inner diameter of a lower region, and the coupling member may be coupled to the lower region of the upper impeller cover and the upper region of the lower impeller cover.

The upper impeller cover may have a diameter which decreases toward the axial lower portion, the lower impeller cover may have a diameter which decreases toward the axial upper portion, and the coupling member may penetrate a region adjacent to an upper surface of the lower impeller cover, and may be coupled to a region adjacent to a lower surface of the upper impeller cover.

As a result, spatial efficiency of the motor may be enhanced.

Further, the upper impeller cover may include a seat portion extending to the axial lower portion on a radial outer surface of the region adjacent to the lower surface, and the coupling member may be coupled to the seat portion.

In addition, the upper housing may include an annular first body portion placed in the axial upper portion of the stator core, and first leg portions extending in the axial direction at a radial outer side of the first body portion, and the first leg portions may be penetrated by the coupling member, and upper surfaces of the first leg portions may be seated on a lower surface of the seat portion.

Further, the seat portion may include a seat groove formed to be concave upward, on which the upper surfaces of the first leg portions are seated.

In addition, upper regions of the first leg portions may include first guide portions having a smaller diameter than the other regions, and the region adjacent to the upper surface of the lower impeller cover may include first holes penetrated by the first guide portions and second holes penetrated by the other regions of the first leg portions.

In addition, heights in the axial direction of a region adjacent to the rotational shaft among the first guides may be smaller than heights in the axial direction of a region far from the rotational shaft.

Further, the lower surface of the upper impeller cover may include a first step portion, and the upper surface of the lower impeller cover which is in contact with the lower surface of the upper impeller cover may include a second step portion formed in a complementary to the first step portion.

In addition, the inner diameter of the upper region of the upper impeller cover may be larger than the inner diameter of the lower region of the lower impeller cover.

In addition, the stator core may include a vertical groove that is formed to be concave radially inward on the radial outer surface and extends in the axial direction, and the coupling member may be placed to be adjacent to the vertical groove in the radial direction.

Further, the insulator may include a first region placed in the axial upper portion of the stator core, a second region placed in the axial lower portion of the stator core, and a third region connecting the first region and the second region, the upper housing may include an annular first body portion placed in the axial upper portion of the first region, and first leg portions extending in a vertical direction at the radial outer side of the first body portion, and lower regions of the first leg portions may be coupled to the first region.

In addition, the first region may include first coupling grooves that are formed to be concave radially inward on the radial outer surface and coupled to a radial inner region of the first leg portion.

Further, first leg portion may include second coupling grooves that are formed to be concave radially outward at a radial inner side of a lower surface, and first surfaces facing the radial inner sides of the second coupling grooves may be in contract with the outer surface of the stator core, and second surfaces facing the axial lower sides of the second coupling grooves may be in contract with the upper surface of the stator core.

In addition, the stator core may include vertical grooves that are formed to be concave radially inward on the radial outer surface and extend in the axial direction, and the first surfaces of the second coupling grooves may include projection portions that are projected radially inward and placed at the vertical grooves.

Further, the lower housing may include an annular second body portion placed in the axial lower portion of the second region, and second leg portions extending to the axial upper portion at a radial outer side of the second body portion, the second region may include second coupling grooves that are formed to be concave radially inward on the radial outer surface and coupled to radial inner regions of the second leg portions, and upper surfaces of the second leg portions may be in contract with an axial lower surface of the stator core.

Further, the impeller may be located downstream of a flow path generated by rotation of the impeller.

### [Advantageous Effects]

Through the present disclosure, it is possible to provide a motor that may reduce deformation of an impeller cover that occurs during operation of the motor and enhanced flow path performance.

Further, through the present disclosure, it is possible to provide a motor that may enhance spatial efficiency.

### [Description of Drawings]

FIGS. 1 and 2 are perspective views of a motor according to an embodiment of the present disclosure.
FIG. 3 is an exploded perspective view of the motor according to an embodiment of the present disclosure.
FIG. 4 is a cross-sectional view of the motor according to an embodiment of the present disclosure.
FIGS. 5 and 6 are perspective views of some configurations of the motor according to an embodiment of the present disclosure.
FIG. 7 is a front view of an impeller cover of the motor according to an embodiment of the present disclosure.
FIG. 8 is a cross-sectional view of the impeller cover of the motor according to an embodiment of the present disclosure.
FIG. 9 is a perspective view of a lower impeller cover of the motor according to an embodiment of the present disclosure.
FIG. 10 is a perspective view of an upper impeller cover of the motor according to an embodiment of the present disclosure.
FIGS. 11 and 12 are perspective views of an upper housing of the motor according to an embodiment of the present disclosure.
FIG. 13 is a front view of the upper housing of the motor according to an embodiment of the present disclosure.
FIG. 14 is a perspective view of an insulator of the motor according to an embodiment of the present disclosure.
FIG. 15 is a perspective view of a stator core of the motor according to an embodiment of the present disclosure.
FIG. 16 is a perspective view of a lower housing of the motor according to an embodiment of the present disclosure.
FIG. 17 is a diagram illustrating deformation of the impeller cover according to an operation of the motor according to an embodiment of the present disclosure.
FIG. 18 is a diagram illustrating deformation of an impeller cover according to an operation of a motor in related art.

### [Mode for Invention]

Hereinafter, embodiments disclosed in the present disclosure will be described in detail with reference to the accompanying drawings and the same or similar components are denoted by the same reference numerals regardless of a sign of the drawing, and duplicated description thereof will be omitted.

However, the technical spirit of the present disclosure is not limited to some described embodiments, but may be implemented in various forms different from each other, and one or more of the components may be selectively combined or substituted between the embodiments within the scope of the technical spirit of the present disclosure.

In addition, the terms (including technical and scientific terms) used in the embodiments of the present disclosure may be interpreted as meanings that can be generally understood by those skilled in the art to which the present disclosure belongs, unless otherwise clearly defined and described, and terms that are generally used, such as terms defined in advance, may be interpreted in consideration of the meanings in the context of the related art.

Further, the term used in the embodiments of the present disclosure is for the purpose of describing the embodiments only and is not intended to be limiting of the present disclosure.

In the present disclosure, a singular form may include plural forms as well, unless the context clearly indicates otherwise, and when it is described as "at least one (or more) of A, B, and C," it may include one or more of all combinations that can be combined by A, B, and C.

Further, , the terms "first", "second", "A", "B", " (a)", " (b)", and the like may be used to describe the components in the embodiments of the present disclosure. These terms are only used to distinguish the components from other components, and are not intended to limit the nature, sequence, or order of the components by the terms.

In addition, when a component is described as being "connected," "coupled," or "connected" to another component, that component can be directly "connected," "connected," or "coupled" to the other component as well as being "connected", "coupled", or "connected" by virtue of another component being between that element and the other element.

In addition, when a component is described as being formed or placed "on (above)" or "under (below)" of each component, "on (above)" or "under (below) " includes not only a case in which two components are in direct contact with each other, but also a case in which one or more other components are formed or placed between the two components. In addition, when "on (above)" or "under (below)" is expressed, not only an upward direction but also a downward direction with respect to one component may be included.

Meanwhile, a term "disclosure" may be replaced with terms such as document, specification, description, etc.

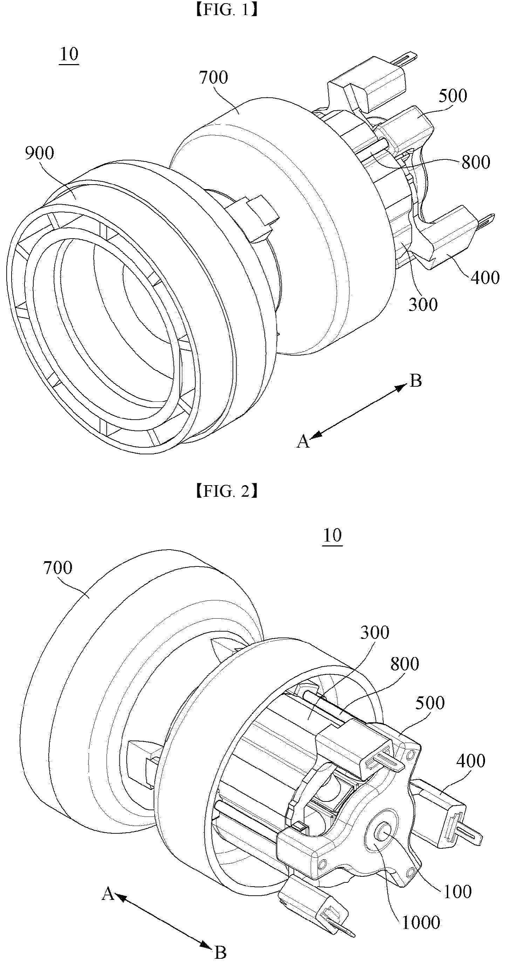

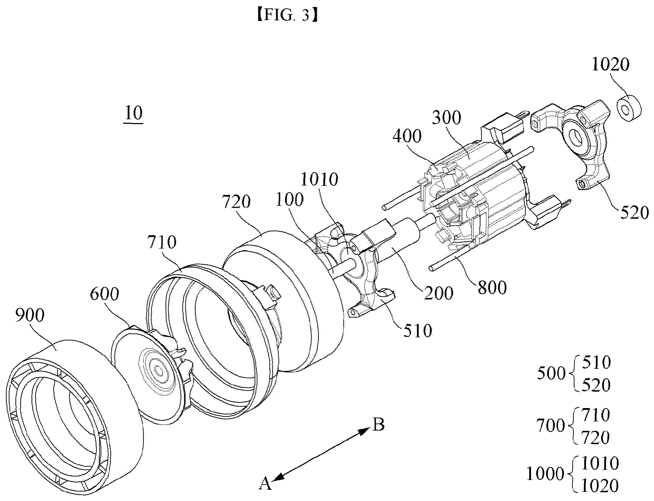

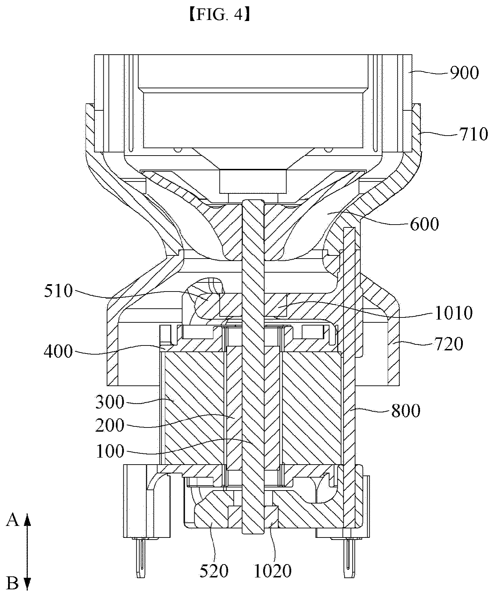

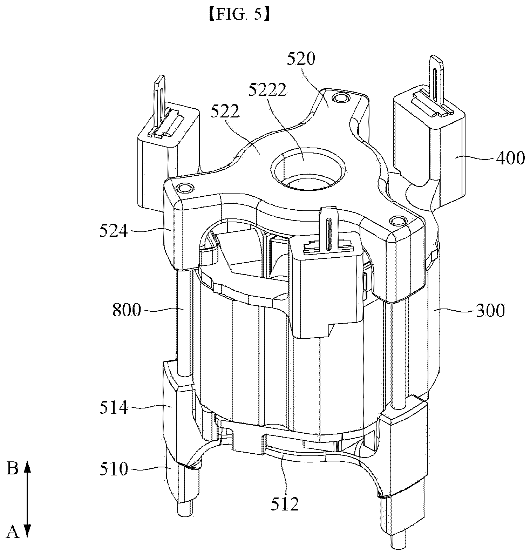

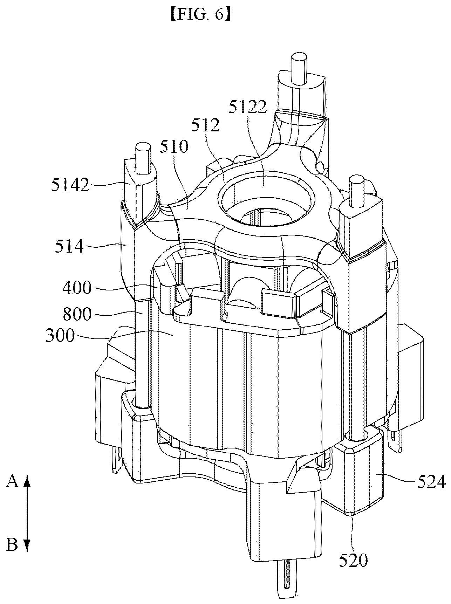

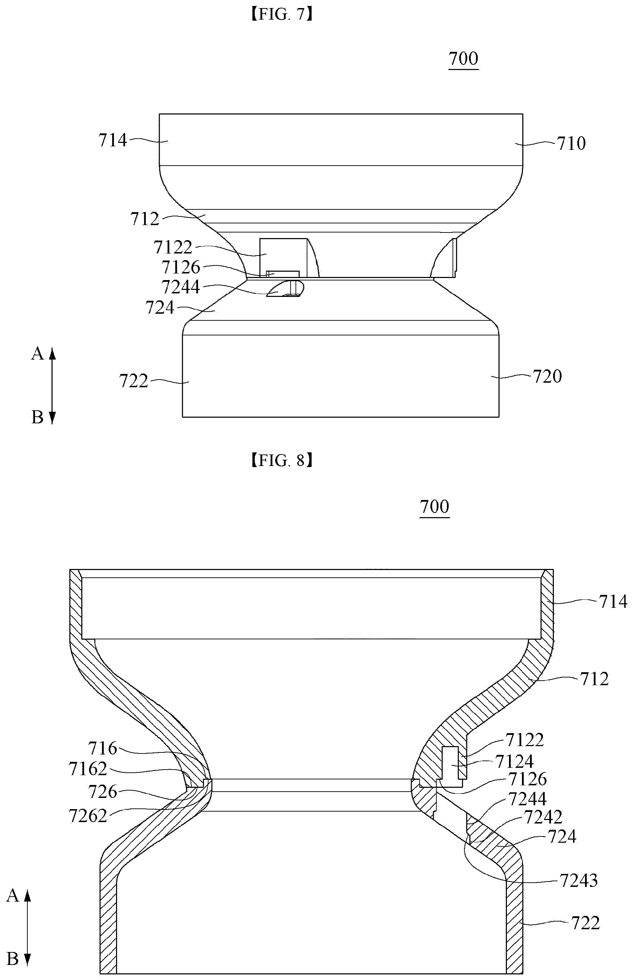

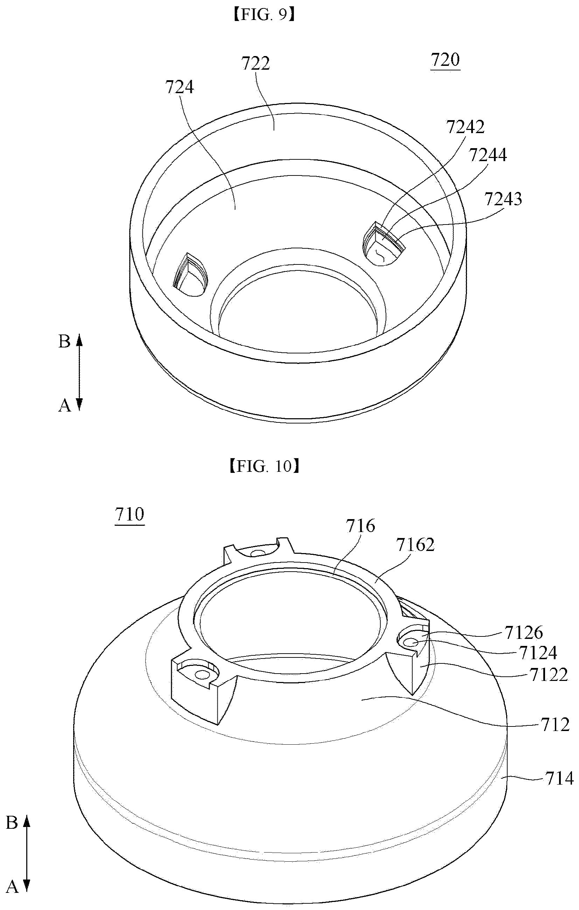

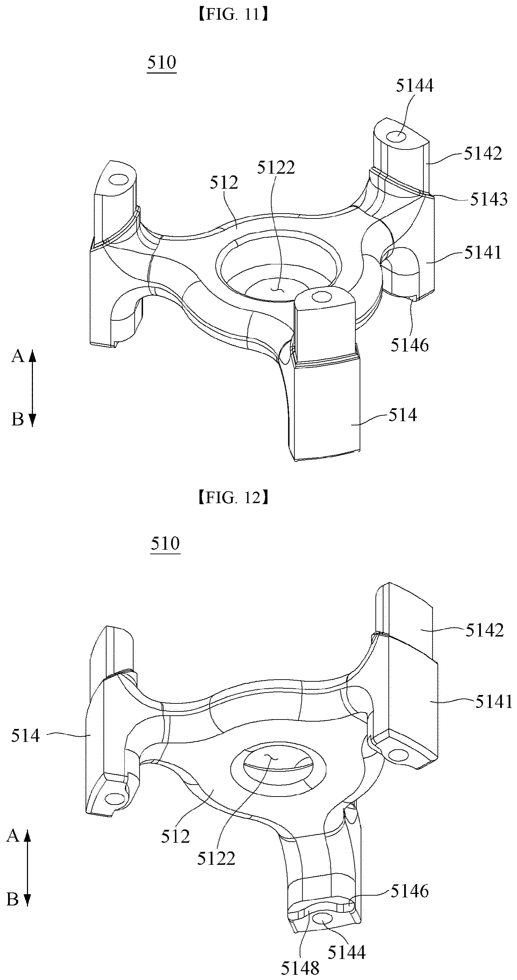

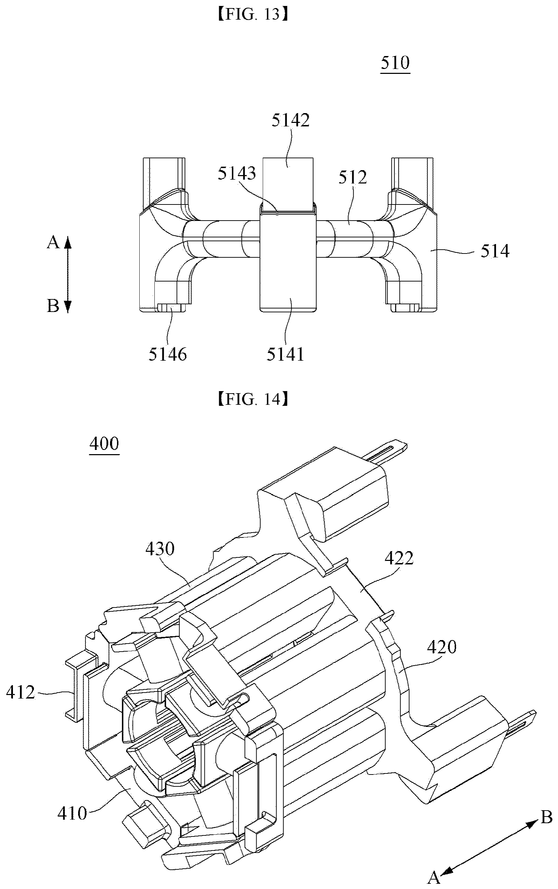

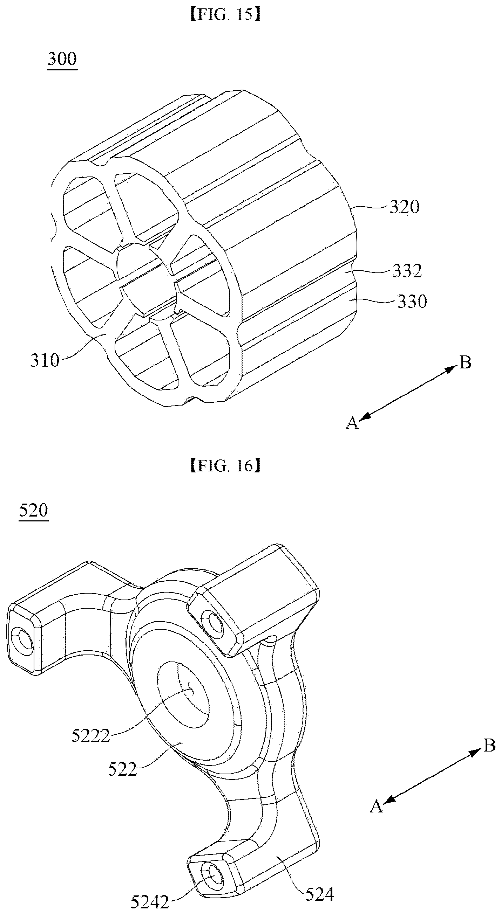

FIGS. 1 and 2 are perspective views of a motor according to an embodiment of the present disclosure. FIG. 3 is an exploded perspective view of the motor according to an embodiment of the present disclosure. FIG. 4 is a cross-sectional view of the motor according to an embodiment of the present disclosure. FIGS. 5 and 6 are perspective views of some configurations of the motor according to an embodiment of the present disclosure. FIG. 7 is a front view of an impeller cover of the motor according to an embodiment of the present disclosure.. 8 is a cross-sectional view of the impeller cover of the motor according to an embodiment of the present disclosure. FIG. 9 is a perspective view of a lower impeller cover of the motor according to an embodiment of the present disclosure. FIG. 10 is a perspective view of an upper impeller cover of the motor according to an embodiment of the present disclosure. FIGS. 11 and 12 are perspective views of an upper housing of the motor according to an embodiment of the present disclosure. FIG. 13 is a front view of the upper housing of the motor according to an embodiment of the present disclosure. FIG. 14 is a perspective view of an insulator of the motor according to an embodiment of the present disclosure. FIG. 15 is a perspective view of a stator core of the motor according to an embodiment of the present disclosure. FIG. 16 is a perspective view of a lower housing of the motor according to an embodiment of the present disclosure.

Referring to FIGS. 1 to 16, a motor 10 according to an embodiment of the present disclosure may include a rotational shaft 100, a rotor 200, a stator core 300, an insulator 400, a housing 500, an impeller 600, an impeller cover 700, a coupling member 800, a diffuser 900, and a bearing 1000, but except for some components, the present disclosure may be executed, and other additional components are not also excluded.

The motor 10 may be a suction motor used in a cleaner. The motor 10 may generate a suction force to cause external dust to flow into the cleaner. The motor 10 may be placed to form a reverse flow path with respect to the rotational shaft 100. Specifically, the impeller 600 may be placed downstream of a flow path generated according to rotation of the impeller 600 coupled to the rotation shaft 100. In other words, the flow path generated according the rotation of the impeller 600 may be formed by sequentially passing through the housing 500, the insulator 400, the impeller 600, and the diffuser 900. As a result, a heat dissipation effect on heat generated due to an electromagnetic interaction between the rotor 200 and the stator core 300 may be enhanced compared to a motor placed in a forward flow path.

The rotational shaft 100 may extend in an axial direction. In the present disclosure, the axial direction may be interpreted as meaning a vertical direction or an up-down direction with reference to FIG. 4. Further, in the present disclosure, it may be interpreted that an axial upper portion means direction "A" and an axial lower portion means direction "B".

The rotational shaft 100 may be formed in a cylindrical shape. The rotor 200 may be coupled to an outer peripheral surface of the rotational shaft 100. The rotational shaft 100 may rotate in one direction or the other direction by rotation of the rotor 200. The impeller 600 may be coupled to an outer peripheral surface of the rotational shaft 100. The impeller 600 may rotate in one direction or the other direction according to rotation of the rotational shaft 100. The rotational shaft 100 may be rotatably coupled to the housing 500 through the bearing 1000.

The rotor 200 may be coupled to the rotational shaft 100. The rotor 200 may rotate the rotational shaft 100 in one direction or the other direction by rotation. The rotor 200 may face the stator core 300. The rotor 200 may be placed inside the stator core 300. The rotor 200 may be formed in a cylindrical shape. The rotor 200 may rotate in one direction or the other direction by an electromagnetic interaction with the stator core 300. Specifically, when a magnetic field is formed in the stator core 300 by a coil (not illustrated) placed in the stator core 300, the rotor 200 may rotate in one direction or the other direction by the resulting electromagnetic interaction. The rotor 200 may be placed between a first bearing 1010 and a second bearing 1020.

The stator core 300 may be coupled to the housing 500 or the insulator 400. The stator core 300 may face the rotor 200. A coil (not illustrated) may be placed in the stator core 300. The stator core 300 may enclose the rotor 200. The stator core 300 may be placed at a radial outer side of the rotor 200. The stator core 300 may be formed of a conductive material. A stator may include the stator core 300 and the insulator 400, and may be referred to as a "stator".

Referring to FIG. 15, the stator core 300 may include an upper surface 310, a lower surface 320, an outer surface 330 connecting the upper surface 310 and the lower surface 320, and a vertical groove 332 formed to be concave radially inward on the outer surface 330. The vertical groove 332 may extend in a vertical direction. The vertical groove 332 may extend from the upper surface 310 to the lower surface 320 on the outer surface 330 of the stator core 300. An axial cross section of the vertical groove 332 may be formed in an arc shape. The vertical groove 332 may be placed to be adjacent to the coupling member 800 in a radial direction. A projection portion 5148 of a second coupling groove 5146 of a first leg portion 514 of the upper housing 510 may be seated on at least a portion of the vertical groove 332. Therefore, spatial efficiency may be enhanced.

The insulator 400 may be coupled to the stator core 300. The insulator 400 may be formed of an insulating material.

Referring to FIG. 14, the insulator 400 may include a first region 410 placed in an axial upper portion of the stator core 300, a second region 420 placed in an axial lower portion of the stator core 300, and a third region 430 connecting the firs region 410 and the second region 420.

The first region 410 may be placed at a lower portion of a first body portion 512 of the upper housing 510. The first region 410 may be coupled to the first leg portion 514 of the upper housing 510. The first region 410 may include first coupling grooves 412 that are formed to be concave radially inward on a radial outer surface. A radial inner side of the first leg portion 514 of the upper housing 510 may be coupled to the first coupling groove 412. The first coupling grooves 412 may include a plurality of first coupling grooves 412 that are spaced apart from each other in a circumferential direction. In an embodiment of the present disclosure, it is described as an example that the number of plurality of first coupling grooves 412 is three, but may be variously changed according to the number of first leg portions 514 of the upper housing 510.

The second region 420 may be placed at an upper portion of a second body portion 522 of a lower housing 520. The second region 420 may be coupled to a second leg portion 524 of the lower housing 520. The second region 420 may include second coupling grooves 422 that are formed to be concave radially inward on the radial outer surface. A radial inner side of the second leg portion 524 of the lower housing 520 may be coupled to the second coupling groove 422. The second coupling grooves 422 may include a plurality of second coupling grooves 422 that are spaced apart from each other in the circumferential direction. In an embodiment of the present disclosure, it is described as an example that the number of plurality of second coupling grooves 422 is three, but may be variously changed according to the number of second leg portions 524 of the lower housing 520.

A substrate (not illustrated) may be coupled to an axial rear end of the second region 420. The substrate is electrically connected to the coil the stator core 300 to supply current to the coil.

The housing 500 may be coupled to the insulator 400. The housing 500 may enclose the stator core 300. The housing 500 may include an upper housing 510, and a lower housing 520 spaced apart from the upper housing 510 in the axial direction.

The upper housing 510 may be placed in an axial upper portion of the lower housing 520. Referring to FIGS. 11 to 13, the upper housing 510 may include a first body portion 512 placed in the axial upper portion of the stator core 300 and first leg portions 514 extending in the axial direction at a radial outer side of the first body portion 512.

The first bearing 1010 may be coupled to the first body portion 512. The rotational shaft 100 may be rotatably coupled to the first body portion 512 through the first bearing 1010. The first body portion 512 may have a first central hole 5122 to which the first bearing 1010 is coupled. The first body portion 512 may be placed in an axial upper portion of the first region 410 of the insulator 400. The first body portion 512 may be formed in an annular shape.

The first leg portions 514 may be penetrated by the coupling member 800. A first leg hole 5144 penetrated by the coupling member 800 may be formed in the first leg portion 514. The first leg hole 5144 may extend in the axial direction to communicate an upper surface and a lower surface of the first leg portion 514. Upper surfaces of the first leg portions 514 may be seated on the upper impeller cover 710. The upper surfaces of the first leg portions 514 may be seated on a lower surface of a seat portion 7122 formed in a lower region 712 of the upper impeller cover 710. The upper surface of the first leg portion 514 may be seated in a seat groove 7126 formed in the seat portion 7122.

The first leg portion 514 may include a support portion 5141 and a first guide portion 5142 having a smaller diameter than the support portion 5141. The first guide portion 5142 may be formed in an upper region of the first leg portion 514. A region other than the first guide portion 5142 in the first leg portion 514 may be the support portion 5141. The first guide portion 5142 may penetrate a first hole 7244 of the lower impeller cover 720. The support portion 5141 may penetrate a second hole 7242 of the lower impeller cover 720. Axial heights of a region (radial inner side) adjacent to the rotation shaft 100 among the first guide portions 5142 may be smaller than axial heights of a region (radial outer side) far from the rotational shaft 100. Accordingly, a region in which the first leg portion 514 passes through the lower impeller cover 720 may be guided.

A leg step portion 5143 may be formed between the support portion 5141 and the first guide portion 5142. The leg step portion 5143 may abut on a hole step portion 7243 between the first hole 7244 and the second hole 7242 of the lower impeller cover 720. Accordingly, a location of the first leg portion 514 placed in the lower impeller cover 720 may be stably guided.

A lower region of the first leg portion 514 may be coupled to the insulator 400. Specifically, the lower region of the first leg portion 514 may be coupled to the first region 410 of the insulator 400. In this case, a radial inner region of the lower region of the first leg portion 514 may be coupled to the first connecting groove 412 of the first region 410. The first leg portion 514 may include second coupling grooves 5146 that are formed to be concave radially outward from the radial inner side of the lower surface. A first surface facing the radial inner side of the second coupling groove 5146 may be in contract with the outer surface 330 of the stator core 300, and a second surface facing an axial lower side of the second coupling groove 5146 may be in contract with the upper surface 310 of the stator core 300. The first surface facing the radial inner side of the second coupling groove 5146 or the rotational shaft 100 may include a projection portion 5148 that is projected radially inward. The projection portion 5148 may be placed at the vertical groove 332 of the stator core 300.

The first leg portions 514 may include a plurality of first leg portions 514 that are spaced apart from each other in the circumferential direction. In the present disclosure, it is described as an example that the number of plurality of first leg portions 514 is three, but is not limited thereto, and the number of plurality of first leg portions 514 may be variously changed.

The lower housing 520 may be disposed at an axial lower portion of the upper housing 510. Referring to FIG. 16, the lower housing 520 may include a second body portion 522 placed in the axial lower portion of the stator core 300 and a second leg portion 524 extending axially upward from a radial outer side of the second body portion 522.

The second bearing 1020 may be coupled to the second body portion 522. The rotational shaft 100 may be rotatably coupled to the second body portion 522 through the second bearing 1020. A second central hole 5222 to which the second bearing 1020 is coupled may be formed in the second boy portion 522. The second body portion 522 may be placed in an axial lower portion of the second region 420 of the insulator 400. The second body portion 522 may be formed in an annular shape.

The second leg portions 524 may be penetrated by the coupling member 800. Second leg holes 5242 penetrated by the coupling member 800 may be formed in the second leg portions 524. The second leg hole 5242 may extend in the axial direction to communicate an upper surface and a lower surface of the second leg portion 524. The upper surface of the second leg portion 524 may be in contract with the lower surface 320 of the stator core 300. A radial inner region of the second leg portion 524 may be coupled to the second coupling groove 422 of the second region 420 of the insulator 400.

The second leg portions 524 may include a plurality of second leg portions 524 that are spaced apart from each other in the circumferential direction. In the present disclosure, it is described as an example that the number of plurality of second leg portions 524 is three, but is not limited thereto, and the number of plurality of second leg portions 524 may be variously changed.

The impeller 600 may be coupled to the rotational shaft 100. The impeller 600 may be placed in the axial upper region of the rotational shaft 100. The impeller 600 may be placed in the axial upper portion of the first bearing 1010. The impeller 600 may rotate in one direction or the other direction according to rotation of the rotational shaft 100. The impeller 600 may be covered by the impeller cover 700. Specifically, the impeller 600 may be placed at the radial inner side of the upper impeller cover 710 and covered by the upper impeller cover 710. The impeller 600 may have a smaller diameter toward the axial lower portion. The impeller 600 may be formed in a centrally opened conical shape as a whole. A plurality of impeller blades projected radially outward and spaced apart from each other in the circumferential direction may be formed on the radial outer surface of the impeller 600.

The impeller cover 700 may be coupled to the housing 500. The impeller cover 700 may cover the impeller 600. The impeller cover 700 may be formed in a mortar shape as a whole. Accordingly, flow efficiency of air by the impeller 600 may be enhanced, and spatial efficiency may be enhanced.

The impeller cover 700 may include an upper impeller cover 710 and a lower impeller cover 720 placed at the axial lower portion of the upper impeller cover 720. In an embodiment of the present disclosure, it is described as an example that the upper impeller cover 710 and the lower impeller cover 720 are separately formed and coupled, but it is not excluded that the upper impeller cover 710 and the lower impeller cover 720 are integrally formed.

The upper impeller cover 710 may be placed in the axial upper portion of the lower impeller cover 720. An inner diameter of the lower region 712 of the upper impeller cover 710 may be smaller than an inner diameter of the upper region 714. An outer diameter of the upper region 714 of the upper impeller cover 710 may have a predetermined value. A diameter of the lower region 712 of the upper impeller cover 710 may decrease toward the axial lower portion. The inner diameter of the upper region 714 of the upper impeller cover 710 may be formed to be larger than the diameter of the lower region 722 of the lower impeller cover 720.

The upper impeller cover 710 may include a seat portion 7122 that extends axially downward on a radial outer surface of an adjacent region of the lower surface 716. The seat portion 7122 may be formed in the lower region 712 of the upper impeller cover 710. The coupling member 800 may be coupled to the seat portion 7122. The seat portion 7122 may include a seat groove 7126 which is formed to be concave upward on the lower surface. The upper surface of the first leg portion 514 of the upper housing 510 may be seated on the seat groove 7126.

The lower impeller cover 720 may be placed in the axial lower portion of the upper impeller cover 710. An inner diameter of the upper region 724 of the lower impeller cover 720 may be smaller than an inner diameter of the lower region 722. An inner diameter or an outer diameter or of the lower region 722 of the lower impeller cover 720 may have a predetermined value. A diameter of the upper region 724 of the lower impeller cover 720 may decrease toward the axial upper portion.

A region adjacent to the upper surface 726 in the upper region 724 of the lower impeller cover 720 may include a first hole 7244 penetrated by the first guide portion 5142 and a second hole 7242 penetrated by the support portion 5141. A diameter of the second hole 7242 may be formed to be larger than a diameter of the first hole 7244. A hole step portion 7243 may be formed between the first hole 7244 and the second hole 7242. The hole step portion 7243 may abut on the leg step portion 5143 of the first leg portion 514. Accordingly, a region in which the first leg portion 514 passes through the lower impeller cover 720 may be guided.

The lower surface 716 of the upper impeller cover 710 and the upper surface 726 of the lower impeller cover 720 may be in contact with and coupled to each other. An inner diameter of the lower surface 716 of the upper impeller cover 710 and an inner diameter of the upper surface 726 of the lower impeller cover 720 may be substantially the same as each other. A first step portion 7162 formed on the lower surface of the upper impeller cover 710 and a second step portion 7262 formed on the upper surface 726 of the lower impeller cover 720 may abut on each other. The first step portion 7162 and the second step portion 7262 may be formed in complementary shapes to each other. As a result, not only a location at which the upper impeller cover 710 and the lower impeller cover 720 are coupled to each other may be guided, but also a contact area between the lower surface 716 of the upper impellor cover 710 and the upper surface 726 of the lower impeller cover 720 may be increased to enhance coupling strength.

The coupling member 800 may couple the housing 500 and the impeller cover 700. The coupling member 800 may be coupled to the upper impeller cover 710 by sequentially penetrating the lower housing 520, the upper housing 510, and the lower impeller cover 720. In this case, the coupling member 800 may be coupled to the lower region 712 of the upper impeller cover 710 and the upper region 724 of the lower impeller cover 720. Specifically, the coupling member 800 may penetrate a region adjacent to the upper surface 726 of the lower impeller cover 720 and may be coupled to a region adjacent to the lower surface 716 of the upper impeller cover 710. As a result, the lower housing 520, the upper housing 510, the lower impeller cover 720, and the upper impeller cover 710 may be coupled to each other at once, and deformation of the impeller cover 700 that occurs during operation of the motor 10 may be reduced and flow path performance may be enhanced. In addition, spatial efficiency of internal components of the motor 10 is enhanced.

The coupling member 800 may be coupled to the seat portion 7122 of the lower region 712 of the upper impeller cover 710. Specifically, the coupling member 800 may be coupled to a third coupling groove 7124 formed inside the seat portion 7122. The third coupling groove 7124 of the seat portion 7122 may be formed to be concave axially upward from the lower surface of the seat groove 7126 of the seat portion 7122.

The coupling member 800 may be placed to be adjacent to the outer surface 330 of the stator core 300. Specifically, the coupling member 800 may be placed to be radially adjacent to the vertical groove 332 formed on the outer surface 330 of the stator core 300. As a result, spatial efficiency may be enhanced.

The coupling portion 800 may include a plurality of coupling members 800 that are spaced apart from each other in the circumferential direction. In an embodiment of the present disclosure, it is described as an example that the number of plurality of coupling members 800 is three, but is not limited thereto, and may be variously changed according to the number of first leg portions 514 of the upper housing 510 and the number of second leg portions 524 of the lower housing 520.

The diffuser 900 may be coupled to the impeller cover 700. The diffuser 900 may be coupled to the upper impeller cover 710. The diffuser 900 may be coupled to the upper region 714 of the upper impeller cover 710. The diffuser 900 may be projected axially upward from the upper impeller cover 710. The diffuser 900 may be placed on the rotational shaft 100, and in the axial upper portion of the impeller 600. The diffusion 900 may include guide vanes formed radially outward. As a result, efficiency of air flow by the impeller 600 may be enhanced.

The bearing 1000 may rotatably couple the rotational shaft 100 to the housing 500. The bearing 1000 may include a first bearing 1010 placed in the axial upper portion of the rotor 200 and a second bearing 1020 placed in the axial lower portion of the rotor 200.

The first bearing 1010 may be coupled to the upper housing 510. The first bearing 1010 may be coupled to the first central hole 5122 of the first body portion 512 of the upper housing 510. The first bearing 1010 may be placed on the outer peripheral surface of the rotational shaft 100. As a result, the first bearing 1010 may rotatably couple the rotational shaft 100 to the upper housing 510.

The second bearing 1020 may be coupled to the lower housing 520. The second bearing 1020 may be coupled to the second central hole 5222 of the second body portion 522 of the lower housing 520. The second bearing 1020 may be placed on the outer peripheral surface of the rotational shaft 100. As a result, the second bearing 1020 may rotatably couple the rotational shaft 100 to the lower housing 520.

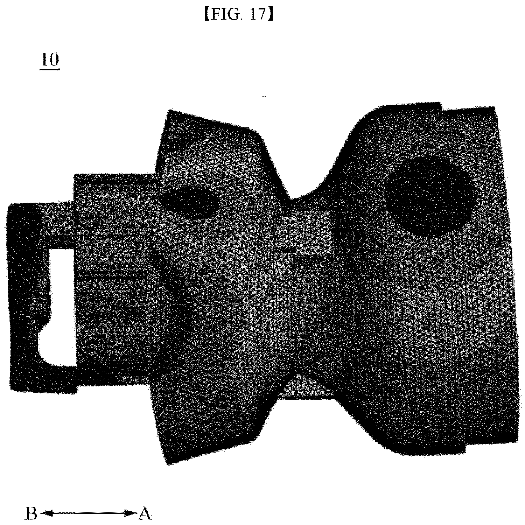

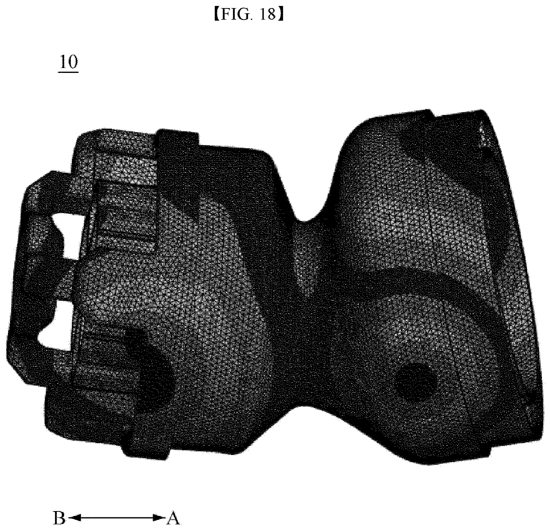

FIG. 17 is a diagram illustrating deformation of the impeller cover according to an operation of the motor according to an embodiment of the present disclosure. FIG. 18 is a diagram illustrating deformation of an impeller cover according to an operation of a motor in related art.

Referring to FIG. 17, it can be seen that the deformation of the impeller cover 700 according to the operation of the motor 10 according to an embodiment of the present disclosure is not large.

In contrast, referring to FIG. 18, it can be seen that the deformation of the impeller cover according to the operation of the motor in the related art is large.

That is, in the case of the motor 10 according to an embodiment of the present disclosure, the deformation of the impeller cover 700 is reduced, so that damage to a component may be prevented and vibration may be reduced.

While the embodiments of the present disclosure have been described above with reference to the accompanying drawings, it will be understood by those skilled in the art that the present disclosure may be embodied in other specific forms without departing from the spirit or essential characteristics thereof. Therefore, it should be understood that the embodiments described above are illustrative and non-restrictive in every aspect.

## Claims

1. A motor comprising:
a rotational shaft;
a rotor coupled to the rotational shaft;
a stator core placed at a radial outer side of the rotor;
an insulator coupled to the stator core;
a housing coupled to the insulator and enclosing the stator core;
an impeller coupled to an axial upper region of the rotational shaft;
an impeller cover coupled to the housing and enclosing the impeller; and
a coupling member coupling the housing and the impeller cover,
wherein the housing includes an upper housing, and a lower housing spaced apart from the upper housing in the axial direction,
wherein the impeller cover includes an upper impeller cover, and a lower impeller cover placed in the axial lower portion of the upper impeller cover, and
wherein the coupling member is coupled to the upper impeller cover by sequentially penetrating the lower housing, the upper housing, and the lower impeller cover.

2. The motor of claim 1, wherein the upper impeller cover is formed such that an inner diameter of a lower region is smaller than an inner diameter of an upper region,
wherein the lower impeller cover is formed such that an inner diameter of an upper region is smaller than an inner diameter of a lower region, and
wherein the coupling member is coupled to the lower region of the upper impeller cover and the upper region of the lower impeller cover.

3. The motor of claim 2, wherein the upper impeller cover has a diameter which decreases toward the axial lower portion,
wherein the lower impeller cover has a diameter which decreases toward the axial upper portion, and
wherein the coupling member penetrates a region adjacent to an upper surface of the lower impeller cover, and is coupled to a region adjacent to a lower surface of the upper impeller cover.

4. The motor of claim 3, wherein the upper impeller cover includes a seat portion extending to the axial lower portion on a radial outer surface of the region adjacent to the lower surface, and
wherein the coupling member is coupled to the seat portion.

5. The motor of claim 4, wherein the upper housing includes an annular first body portion placed in the axial upper portion of the stator core, and first leg portions extending in the axial direction at a radial outer side of the first body portion, and
wherein the first leg portions are penetrated by the coupling member, and upper surfaces of the first leg portions are seated on a lower surface of the seat portion.

6. The motor of claim 5, wherein the seat portion includes a seat groove formed to be concave upward, on which the upper surfaces of the first leg portions are seated.

7. The motor of claim 5, wherein upper regions of the first leg portions include first guide portions having a smaller diameter than the other regions, and
wherein the region adjacent to the upper surface of the lower impeller cover includes first holes penetrated by the first guide portions and second holes penetrated by the other regions of the first leg portions.

8. The motor of claim 7, wherein heights in the axial direction of a region adjacent to the rotational shaft among the first guide portions are smaller than heights in the axial direction of a region far from the rotational shaft.

9. The motor of claim 2, wherein the lower surface of the upper impeller cover includes a first step portion, and
wherein the upper surface of the lower impeller cover which is in contact with the lower surface of the upper impeller cover includes a second step portion formed in a complementary to the first step portion.

10. The motor of claim 2, wherein the inner diameter of the upper region of the upper impeller cover is larger than the inner diameter of the lower region of the lower impeller cover.

11. The motor of claim 1, wherein the stator core includes a vertical groove that is formed to be concave radially inward on the radial outer surface and extends in the axial direction, and
wherein the coupling member is placed to be adjacent to the vertical groove in the radial direction.

12. The motor of claim 1, wherein the insulator includes a first region placed in the axial upper portion of the stator core, a second region placed in the axial lower portion of the stator core, and a third region connecting the first region and the second region,
wherein the upper housing includes an annular first body portion placed in the axial upper portion of the first region, and first leg portions extending in a vertical direction at the radial outer side of the first body portion, and
wherein lower regions of the first leg portions are coupled to the first region.

13. The motor of claim 12, wherein the first region includes first coupling grooves that are formed to be concave radially inward on the radial outer surface and coupled to a radial inner region of the first leg portion.

14. The motor of claim 12, wherein the first leg portion includes second coupling grooves that are formed to be concave radially outward at a radial inner side of a lower surface, and
wherein first surfaces facing the radial inner sides of the second coupling grooves are in contract with the outer surface of the stator core, and second surfaces facing the axial lower sides of the second coupling grooves are in contract with the upper surface of the stator core.

15. The motor of claim 14, wherein the stator core includes vertical grooves that are formed to be concave radially inward on the radial outer surface and extend in the axial direction, and
wherein the first surfaces of the second coupling grooves include projection portions that are projected radially inward and placed at the vertical grooves.

16. The motor of claim 12, wherein the lower housing includes an annular second body portion placed in the axial lower portion of the second region, and second leg portions extending to the axial upper portion at a radial outer side of the second body portion,
wherein the second region includes second coupling grooves that are formed to be concave radially inward on the radial outer surface and coupled to radial inner regions of the second leg portions, and
wherein upper surfaces of the second leg portions are in contract with an axial lower surface of the stator core.

17. The motor of claim 1, wherein the impeller is located downstream of a flow path generated by rotation of the impeller.
